# FASCICULE DE BREVET EUROPEEN

(11) **EP 3 775 564 B1**
(45) Date de publication et mention de la délivrance du brevet: **19.01.2022**
(21) Numéro de dépôt: 19711931.6
(22) Date de dépôt: 25.03.2019
(51) Int. Cl.: F04D 17/06, F04D 29/38, B64C 11/24, F01D 1/32, F01D 5/18, G05B 19/4093, F04D 29/32

(54) **MÉTHODE DE CONCEPTION, DE CONSTRUCTION ET DE FABRICATION DE ROUE TURBO,HÉLICO,RÉACTEUR (THR)**
VERFAHREN ZUR AUSLEGUNG, KONSTRUKTION UND HERSTELLUNG EINES TURBO-HELIKO-REAKTOR (THR) LAUFRADS
METHOD OF DESIGN, CONSTRUCTION AND MANUFACTURING OF A TURBO-HELICO-REACTOR (THR) WHEEL

(30) Priorité: 03.04.2018 LU 100758
(43) Date de publication de la demande: 17.02.2021
(73) Titulaire: Carpyz SAS, 75015 Paris (FR)
(72) Inventeur: CARROUSET, Pierre, 75015 Paris (FR)
(74) Mandataire: Dennemeyer & Associates S.A.
(86) Numéro de dépôt international: PCT/EP2019/057454
(87) Numéro de publication internationale: WO 2019/192871

(56) Documents cités:
- WO-A1-2016/110364
- WO-A2-2008/012425
- FR-A1- 2 987 657

## Description

La présente invention concerne une méthode de conception, de construction et de fabrication de roue Turbo,Hélico,Réacteur (THR). Plus particulièrement, la présente invention concerne un procédé de conception pour la construction et la fabrication de roues hybrides turbo-hélice.

### Indication de l'état de la technique antérieure

L'amélioration de la poussée axiale des hélices est recherchée depuis longtemps et les demandes récentes de délivrances de Brevets en France dont en particulier celles publiées sous les N° FR 2 987 655, N°FR 2 987 656, et N° FR 2 987 657, toutes trois du 06.09.2013.

Ces procédés connus de conception et de fabrication de turbines intégrées dans des pales d'hélices hélicoïdales, permettent d'obtenir à diamètres équivalents, de plus grandes poussées axiales que les hélices seules au moyen de propulseurs qui ont des turbines intégrées dans les pales des hélices. La construction est faite en partant de deux lames qui en se vrillant vont former le conduit de la turbine intégrée dans la pale de l'hélice. Ce type de propulseur permet en associant l'intérêt d'une turbine à celui d'une hélice, d'obtenir à diamètre égale, des poussées axiales supérieures à celles obtenues avec les hélices seules.

La publication WO/2016/110364 décrit une méthode connue de conception et de construction de roues qui sont simultanément : Turbine, Hélice à pales creuses sur toute leur longueur qui débouchent dans des chambres circulaires périphériques qui ont une fonction de Réacteur Alimentable (THRA), cette méthode permettant, pour chaque ensemble Turbine, Hélice, Réacteur (THRA), de construire avec des lames la section évolutive du conduit intérieur des pales, des hélices qui sont creuses sur toute leur longueur, et sont appuyées sur les profils des fibres neutres des lames qui sont majoritairement des portions de cercles, et qui sont construits pour l'entrée de la turbine et pour les entrées des pales creuses des hélices et leurs arrivées dans leurs chambres, et sont configurés individuellement en donnant au départ des valeurs aux éléments géométriques de base et sont tracés selon des dispositions géométriques particulières, sur des plateaux circulaires de diamètres différents qui eux sont ensuite disposés à plusieurs niveaux de la roue et sont positionnés angulairement sur le même axe indépendamment les uns des autres,

Suivant cette méthode, la disposition particulière des éléments géométriques de base appliquée sur chaque plateau circulaire est obtenue en étant inscrite dans un cercle dont le centre d'où part un rayon d'une valeur numérique donnée qui rejoint son cercle a un point d'intersection préférentiel , le cercle étant la surface de révolution balayée par le bord d'attaque de la lame pendant la rotation de la roue. Une autre valeur numérique est donnée à la corde de l'arc qui est la portion de cercle de la fibre neutre de la lame recherchée, L'une des extrémités de cette corde part du point d'intersection préférentiel et l'autre est positionné à l'intérieur du cercle sur un axe qui part du point préférentiel et forme un angle de 45° avec le rayon.

La position choisie pour cet axe à droite ou à gauche du rayon détermine le sens de rotation de la roue désiré qui est placé sur le rayon vers le centre un autre point situé à une valeur numérique qui est celle du rayon du cercle qui entoure la roue diminuée d'une valeur numérique qui est la racine carrée, de l'addition du carré de deux ¹/2 corde (Pythagore), et une droite de valeur numérique identique à celle de la corde est tirée depuis le point et se confond en son milieu avec le milieu de la corde avec laquelle elle est perpendiculaire et génère un point à son autre extrémité. Le point situé sur le rayon sert de centre de valeur numérique égale à celle de la droite pour la portion de cercle qui va rejoindre les deux extrémités de la corde qui est son arc et qui est le profile circulaire de la lame recherché, et le point situé à l'autre extrémité de la droite qui coupe en son milieu la corde sert de centre pour tracer la portion de cercle qui va rejoindre les deux extrémités de la corde qui est aussi son arc et qui est l'autre profile circulaire symétrique de la lame recherché,

D'autres centres de cercles placés sur la droite perpendiculaire et qui utilisent des valeurs de diamètre plus grandes ou plus petite que ces points leurs permettent de rejoindre ou non les extrémités de la droite et de générer des portions de cercles qui ont des profils plus plats ou plus bombés mais peuvent aussi bénéficier de la méthode, Les profils construits avec cette méthode et avec les mêmes valeurs numériques de chaque côté du rayon sont symétriques, et le mixage des profils des lames obtenus avec cette méthode permettant en jouant sur les paramètres de construire des pales évolutives qui ont des caractéristiques particulières, les valeurs numériques des profils des fibres neutres construits selon cette méthode étant mathématiquement quantifiables, et une même roue pouvant utiliser des profils de lames de turbines et des profils des lames pales d'hélices creuses différent qui sont définis avec la même méthode mais avec des profils différentes sur la même roue.

La publication WO2008/012425 décrit le principe « CARPYZ » dit des 5 paramètres et concerne un procédé de configuration des éléments constitutifs de roues hélicoïdales creuses ou de leurs cages, qui est basé sur l'utilisation de figures géométriques dont les centres servent de référence pour les construire et définir leurs aires, les valeurs d'angles, de décalages des centres et de pas permettant de contrôler les éléments constitutifs.

La publication WO2008 /012425 (PCT /2007/011267) décrit en détail le principe arithmétique dit des cinq paramètres bien connu de l'homme de métier qui s'informe continuellement des nouveautés techniques mondiale, qui est donc immédiatement instruit par cette publication WO2008 /012425 , s'il n'est pas déjà parfaitement informé de ce principe.

Le principe dit des cinq paramètres permet de fabriquer une pale recto-verso en utilisant simultanément seulement cinq valeurs numériques au choix, à savoir des valeurs numériques respectivement pour 1) le bord d'attaque, 2) le bord de fuite, 3) le corps, 4) la longueur, et 5) la cambrure.

La description de cette demande de Brevet nécessite que le lecteur ait une connaissance suffisante concernant les récents outils modernes de CFAO et l'utilisation des outils de paramétrage mathématique très puissants comme par exemple Pro Engener Créo et Dassault Systèmes Catia, voire d'autres outils de programmation. Il y a lieu d'y rajouter un peu d'imagination qui est nécessaire tant que l'on a pas tenu des pièces concrètes dans ses mains. Ces roues ne peuvent être fabriquées que par les machines additives couches par couche qui reçoivent directement par internet partout dans le monde les fichiers générés par les progiciels spécifiques 'CARPYZ' . Il n'est donc fourni aucune valeur numérique aux éléments des roues. Elles ne connaissent pas de limites mais seulement des interdictions et incompatibilités éditées dans le cours de l'utilisation par les outils précités. Cette présente invention permet de construire progressivement partie par partie le SQUELETTE complet de la roue monobloc 'CARPYZ'.

L'outil informatique industriel dit des cinq paramètres permet de générer facilement à la demande et à l'infini, des pales hélicoïdales de formes très complexes et fourni les fichiers informatiques pour les construire. L'homme de métier doit fournir toutes les valeurs numériques nécessaire au principe dit "des cinq paramètres" pour chaque élément décrit indépendamment. L'homme de métier a lui la compétence pour associer les éléments entre eux comme décrit.

Ce principe dit "des cinq paramètres" est un rare outil informatique industriel qui expose un principe de calcul sans références chiffrées.

### Résumé de l'invention

En vue de l'amélioration de la poussée axiale, il est donc clair qu'on a besoin d'une méthode de conception pour la fabrication de roue qui, dans une large mesure, permet de remédier aux insuffisances que l'on a rencontrées dans la technique antérieure. Un objectif de l'invention est de fournir une méthode qui permet d'augmenter de façon sensible la poussée axiale des hélices, et qui peut être augmentable de façon très importante par un fluide énergétique.

Cette nouvelle demande de brevet s'affranchit de cette méthode en employant partout le principe dit des cinq paramètres CARPYZ précité qui permet de façon nouvelle une construction plus méthodique de l'ensemble des éléments constitutifs des roues THRA/E CARPYZ.

Le principe dit des cinq paramètres permet de fabriquer une pale recto-verso en utilisant simultanément seulement cinq valeurs numériques au choix, à savoir des valeurs numériques respectivement pour 1) le bord d'attaque, 2) le bord de fuite, 3) le corps, 4) la longueur, et 5) la cambrure.

L'outil informatique industriel CARPYZ permet de générer facilement à la demande et à l'infini, des pales hélicoïdales de formes très complexes et fourni les fichiers informatiques pour les construire.

L'homme de métier spécialisé peut, en suivant pas à pas ce qui est décrit dans la demande, réaliser concrètement à l'écran les turbines de son choix , comme le fait le déposant, et fournir des fichiers qui permettent de les construire physiquement en additif partout dans le monde .

L'homme de métier doit fournir toutes les valeurs numériques nécessaire au principe dit "des cinq paramètres" pour chaque élément décrit indépendamment, dans la demande de brevet.

L'homme de métier a lui la compétence pour associer les éléments entre eux comme décrit dans la demande.

Cette nouvelle demande de brevet s'affranchit de cette méthode en employant partout le principe dit des cinq paramètres CARPYZ précité qui permet de façon nouvelle une construction plus méthodique de l'ensemble des éléments constitutifs des roues THRA/E CARPYZ de l'invention.

Selon l'invention on utilise "le principe arithmétique dit des cinq paramètres". Cette caractéristique se réfère à l' outil informatique industriel de conception et fabrication assistée par ordinateur, qui a été développé par le demandeur de la présente demande. Toutefois, ce principe précis est accepté universellement et définit un principe ou une procédure standard qui est acceptée sur le plan international en tant que séquence particulière d'opérations standards.

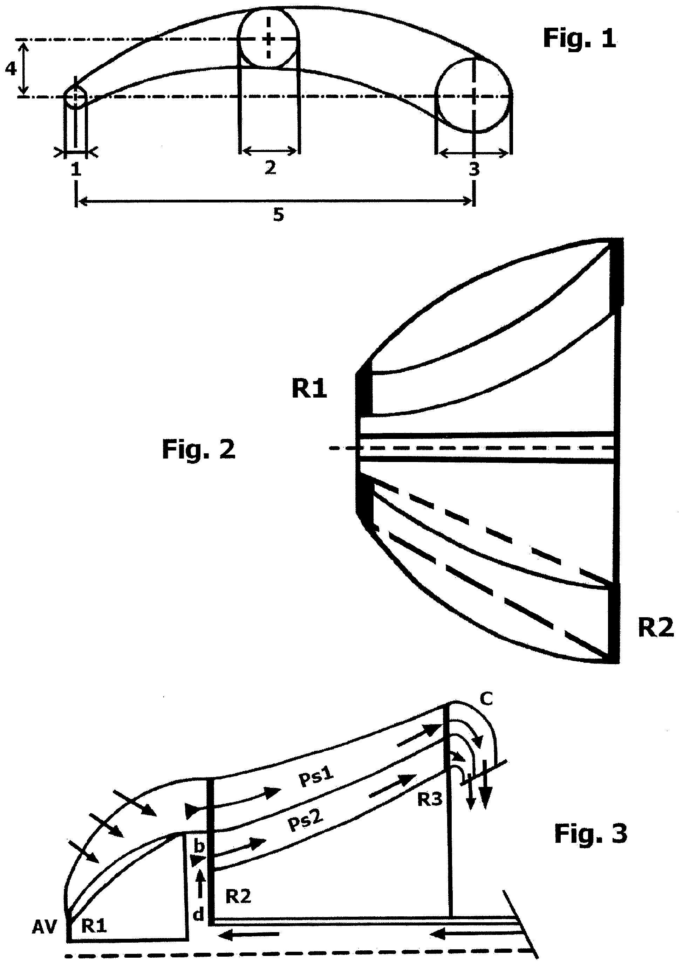

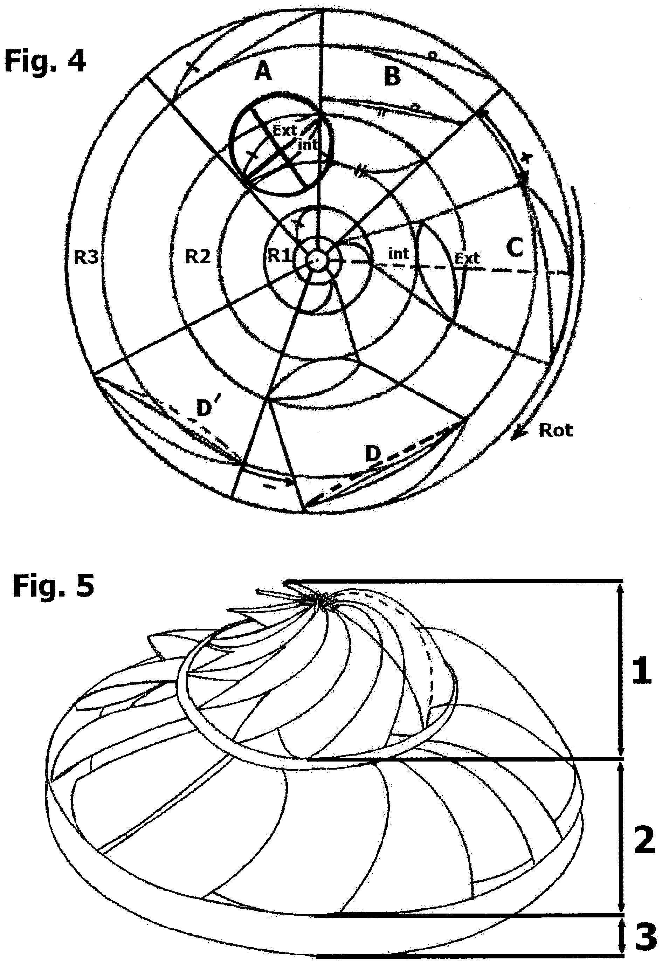

A cet effet, la méthode de conception, de construction et de fabrication d'une roue Turbo,Hélico,Réacteur (THR) de l'invention est caractérisée par le fait que le le squelette de la roue qui est monobloc est construit entre 3 rondelles (Fig 3,R1 -R2-R3) à l'aide d'un Progiciel spécifique CARPYZ, qui fournit une image de base (Fig 5) ou tous les éléments constitutifs de la roue sont cités avec des valeurs numériques et arithmétiques qui sont fournies de façon non exhaustives par défaut en utilisant le principe « CARPYZ » dit des 5 paramètres.

Cette image est créée de façon arbitraire par CARPYZ sur 3 zones de la roue dont l'avant est symboliquement fixé à gauche comme sur le dessin (fig 3, AV) ou selon la (Fig 5,) est l'entrée du fluide , sur la (Fig 5 ,2) est située l'hélice, la (Fig 5, 3) est situé une chambre qui agit sous la roue, par des fentes circulaires périphériques, cachées dessous sur de dessin, comme un réacteur.

Avec l'image montrée à l'écran sont fournies des valeurs déterminées de façon intuitive, selon des roues déjà réalisées mais qui peuvent évoluer à l'infini selon l'utilisation espérée de la roue conçue (exemple : diamètres, nombre de pales, forme des pales, profil des chambres, etc..). Ces valeurs utilisent en continu le principe CARPYZ dit des 5 paramètres (Fig 1) (Brevet FR2007/0011267).II permet de marier facilement à volonté des courbes entre elles en superposant les centres entre eux.

Cette image de base montre les lames de la première zone (Fig 5 ,1) qui comme un inducteur favorise la pénétration du fluide dans l'entrée des pales creuses de l'hélice (Fig 4, A R2) . Le profil de ces lames est conçu sur la face arrière d'une première rondelle placée à l'avant de la roue (Fig 3,R1), dont les diamètres sont fournis par défaut, positionnée sur l'axe à l'avant de la roue, (Fig 4 ,R1 et Fig 2,R1.)

La roue est vue de face comme sur le dessin (Fig 4) et tourne à droite dans le sens des aiguilles d'une montre(Fig 4,Rot), le bord avant de la lame est placé à gauche sur le grand diamètre de la rondelle et le bord arrière de la lame est placé à droite sur le petit diamètre de la rondelle et est décalé angulairement en arrière.

Les valeurs, du décalage angulaire entre les bords avant et arrière de la lame et de sa cambrure, sont des valeurs fournies par défaut, avec les 5 paramètres et sont corrigées à sa demande par le concepteur de la roue. Un autre profile de lame voisin du précédent est aussi projeté avec les 5 paramètres (montré Fig 4, 3 fois sur R2 ) sur la face avant de la deuxième rondelle, (Fig 4, R2 A) qui montre l'intrados (Fig 4, R2 int) et l'extrados (Fig 4, R2 Ext) de l'entrée de la pale.

La lame est générée par l'ordinateur entre les profils des deux rondelles avec les 5 paramètres. Des valeurs sont données, pour la distance qui sépare les deux rondelles et pour le décalage angulaire entre les deux rondelles qui permet de vriller les lames, positivement ou négativement, sont fournies par défaut et sont corrigés par le concepteur. Les lames sont alors dites neutres, ou avalantes ou en retraits.

Le grand profil de la lame d'introduction se raccorde et est de préférence confondu avec celui de l'extrados (Fig 4,R2 Ext) de l'entrée de la pale de l'hélice qui est aussi soumis aux 5 paramètres. L'entrainement en rotation de la roue, est fait par un arbre solidarisé avec le centre à l'arrière de la roue, et tourne selon le sens de rotation choisi qui est inversable (Fig 4, Rot). Cette première résolution montre comment est construit l'avant de la roue qui est indissociable de l'arrière de la roue qui est de préférence monobloc. (Fig 5 ,1-2-3).

Selon l'invention, sur la face arrière de la deuxième rondelle est positionnée l'entrée des pales creuses de l'hélice qui constituent la deuxième zone (FIG 5, 2) de la roue . Les lames de la première zone sont mises en concordance avec les lames de l'extrados (Fig 4, R2 Ext) des pales (FIG 4 ,A) qui sont également adaptées aux 5 paramètres.

Au petit diamètre des pales, se trouve l'entrée du fluide et au grand diamètre des pales se trouve la sortie du fluide. Demande de Brevet FR 1500031 du 09 01 2015 ou l'entrée des pales n'est pas construite avec les 5 paramètres.

Les pales sont constituées de 2 lames et débouchent à leur grand diamètre dans une chambre circulaire située à l'arrière et qui est la troisième zone (FIG 5, 3). Préférentiellement, la lame extrados (Fig 4 ,R2 Ext) de la pale est convexe à l'entrée de la pale et à la sortie de la pale (FIG 4 ,R3 A). La lame intrados (Fig4 ,R2 Int) de la pale est concave à l'entrée de la pale et convexe à la sortie de la pale (Fig 4, R3 Int).

Selon l'invention, les pales de l'hélice débouchent sur la face avant de la troisième rondelle (Fig 3 ,R3) qu'elles traversent. Préférentiellement, le bord droit de la pale (Fig4, R3 A B C D ) est placé sur le grand diamètre de la rondelle. Le bord gauche de la pale (Fig 4 ,R3 A C D ) est placé sur le petit diamètre de la rondelle. La longueur des pales est donnée par la portion angulaire des rondelles dans laquelle elles s'inscrivent. Cette portion est en principe déterminée par la valeur des 360 ° de la circonférence de la roue, divisée par le nombre de pales, car de préférence les pales se jouxtent bord à bord et ne se recouvrent pas entre elles au niveau des bords. Toutefois cette valeur peut être modifiée en connaissance de cause par le concepteur. Les valeurs des petits et grands diamètres de la troisième rondelle définissent l'angle d'attaque des pales dans le fluide et sont données par défaut et corrigeables à la demande par le concepteur. Les diamètres des portions de cercles (Fig4 ,R3) qui construisent l'intrados et l'extrados des lames, sont donnés par défaut et corrigés à la demande par le concepteur de la roue.

Selon l'invention, à leur plus grand diamètre, les pales de l'hélice en arrivant sur la troisième rondelle ont leurs lames intrados et extrados qui se solidifies avec cette rondelle en la traversant. Les pales des hélices distribuent au moins un fluide dans au moins une chambre périphérique dans lesquelles elles débouchent. Au moins une chambre circulaire périphérique est formée par les espaces circulaires contenus entre les portions de cercle circulaires écrites par le concepteur (Fig 3, C)

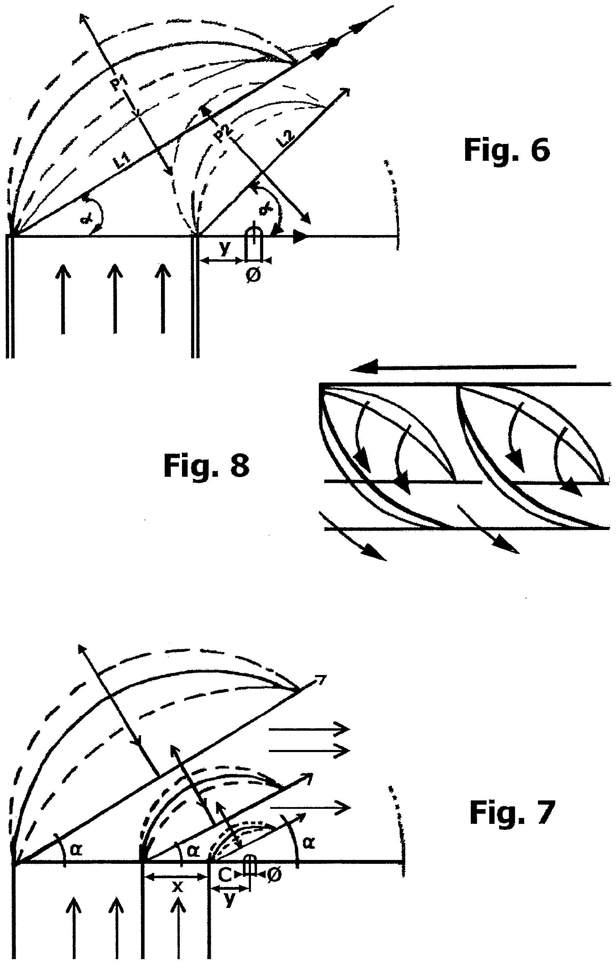

Des lignes droites qui servent de références comme longueur support pour les 5 paramètres, sont tirée en partant de points placés sur le bord du grand et du petit diamètre de la troisième rondelle (Fig 6, L1 ,L2). Elles sont poursuivis vers le centre de la roue à une valeur angulaire (Fig 6) angle α 0 à 90° vis-à-vis de la face de la troisième rondelle) qui sont fournies par défaut comme les autres valeurs des 5 paramètres qui sont aussi corrigeables à la demande.

Au centre de ces droites sont placées des perpendiculaires (Fig 6, P1,P2) sur lesquelles le concepteur place les centres des portions de cercles qui rejoignent les deux extrémités des droites.. Préférentiellement, une gorge circulaire est creusée sur un bord agrandi du petit diamètre de la troisième rondelle dont les valeurs et la position (Fig6, Y) sont choisies par le concepteur. Entre les portions de cercle (Fig 8, Ent) sont positionnées des entretoises profilées et orientées afin de faire écouler le fluide dans le même sens que le veut la roue pour tourner (FIG 4, Rot) entre la deuxième portion de cercle et le petit demi-cercle sont placées des entretoises radiales.

Dans une réalisation préférée de l'invention, la roue "turbo ,helico, reacteur hybride, est une roue roue hybride THR qui véhiculent des fluides ambiants . Ces roues, emploient en complément du turbo réacteur de la roue qui agit avec le fluide ambiant, un fluide très énergétique qui est introduit par l'arbre central de la roue qui est creux. Ce fluide entre dans l'arbre creux à l'arrière de la roue. Ensuite il est conduit jusqu'à l'entrée des pales de l'hélice qui sont creuses et qui sont partagées en deux parties séparées (Fig 3, Ps1, Ps2) avec une cloison verticale radiale, où par une cloison circulaire, qui sont poursuivies sur toute la longueur à l'intérieur de la pale. La deuxième rondelle de la roue, voit son petit diamètre diminuer vers le centre de la roue et va jusqu'à se solidariser avec l'extérieur du tube de l'arbre creux qui est coupé à cet endroit et qui apporte le fluide à fort potentiel énergétique. Un disque est placé vers l'avant de la roue, un peu avant la deuxième rondelle (FIG3, d). Il part de l'axe de la roue et crée entre deux un espace qui est fermé par une bague cylindrique (FIG3, b) qui poursuit la cloison circulaire ou coiffe les cloisons verticales radiales citées ci-dessus et qui partagent les pales d'hélice creuses. Des entretoises radiales sont placées dans l'entre deux de l'espace cité ci-dessus.

Dans une réalisation préférée de l'invention, la méthode de conception pour la fabrication de roue Turbo,Hélico,Réacteur Hybride (THRE) qui emploie un fluide énergétique en complément qui traverse les pales creuses. Il est caractérisé que des chambres sont formées par les espaces circulaires contenus, entre les trois portions de cercle(Fig3, C) qui à la demande sont corrigeable . Une première grande portion de cercle est construite avec l'image des 5 paramètres dont l'extrémité de la ligne droite devient un centre qui est positionné sur le grand diamètre de la troisième rondelle (Fig3 C). Un angle α d'une valeur choisie qui va de 0 à 90°, s'écrit entre la droite de référence précitée et la droite de la longueur de la lame donnée avec toutes les valeurs des 5 paramètres qui sont fournies par défaut et qui sont corrigeables à la demande par le concepteur.

Une deuxième portion de cercle est construite de la même façon avec l'extrémité de la ligne droite qui devient un centre qui est positionné sur le petit diamètre de la troisième rondelle (Fig6 ,C). Un angle α d'une valeur choisie qui va de 0 à 90°, s'écrit entre la droite de référence précitée et la droite de la longueur de la lame donnée avec toutes les valeurs des 5 paramètres qui sont fournies par défaut et qui sont corrigeables à la demande par le concepteur.

Une autre portion de cercle est construite de la même façon avec l'extrémité de la ligne droite, qui devient un centre qui est positionné sur l'arrivée de la cloison précitée, sur la troisième rondelle (Fig 7).

Un angle α d'une valeur choisie qui va de 0 à 90°, s'écrit entre la droite de référence précitée et la droite de la longueur de la lame donnée avec toutes les valeurs des 5 paramètres qui sont fournies par défaut et qui sont corrigeables à la demande par le concepteur

Entre les portions de cercle sont positionnées des entretoises profilées et orientées afin de faire écouler le fluide dans le même sens que le veut la roue pour tourner (FIG 8) . Entre la deuxième et la troisième portion de cercle sont placées des entretoises radiales.

Préférentiellement, pour cette disposition de roue hybride THRE qui emploie un fluide énergétique en complément, partant du creux de l'arbre le fluide énergétique est introduit dans des tubes qui suivent le chemin décrit qui passent dans les pales creuses de l'hélice et aboutissent dans les chambres circulaires situées entre la deuxième et la troisième portion de cercle adaptées par le concepteur pour recevoir les fluides.

Préférentiellement, selon cette méthode de conception pour la fabrication de roue Turbo,Hélico,Réacteur Hybride (THRE), par les conduits habituellement réservé pour l'écoulement des fluides à fort potentiel énergétique sont passés des conducteurs électriques qui aboutissent au niveau des chambres périphériques et sont positionnés pour délivrer l'énergie nécessaire pour amorcer un arc électrique et/ou éclairer une diode électro- luminescente.

Dans une réalisation préférée de l'invention, l'ensemble de la roue "turbo ,helico, reacteur hybride, y compris les rondelles (Fig 4, R1 R2 R3) est construit en utilisant le principe des 5 paramètres dans son intégralité et permet d'obtenir à l'aide de valeurs de cercles infiniment petits des bords coupants nécessaires pour la pénétration des pales et des lames dans les produits . Ce en utilisant des cercles de tous diamètres (FG1, 1,2,3) et des droites (4,5) il est permis de donner à volonté des épaisseurs de matière aux lames et aux pale. La cambrure peut aussi être inversée et être positive ou négative.

Le nouveau principe consiste à prendre le fluide au centre à l'entrée d'une roue et à le faire traverser les pales des hélices qui sont creuses en bénéficiant de la force centrifuge et aboutir dans une chambre circulaire périphérique pourvue d'un orifice circulaire qui éjecte le fluide vers le dessous de la roue en créant une force de réaction par appui sur les couches limites de fluide situées à proximité. L'addition des trois principes permet d'augmenter de façon sensible la poussée axiale d'autant plus qu'elle est augmentable de façon énorme par un fluide énergétique introduit par l'arbre dans le réacteur tel que de l'air comprimé voire de l'hydrogène comme pour les fusées.

Une caractéristique préférée de cette méthode comporte le fait que les fibres neutres sont habillées de matière, en utilisant le principe de la publication de Brevet WO 2008/012425 (principe « CARPYZ » des 5 paramètres) qui construit l'aire d'une pale avec seulement 5 paramètres ou valeurs mathématiques données à des portions de figures géométriques qui ont un centre de référence, et sont placés de préférence en concordance, ou à proximité, des valeurs fournies par les fibres neutres générées selon la présente méthode. En particulier, les fibres neutres sont habillées de matière, en utilisant le principe des 5 paramètres donné par la publication WO 2008/012425, et en employant comme base les valeurs numériques données par les fibres neutres pour placer la matière de part et d'autre de la fibre ou en la recouvrant au moins partiellement.

La méthode de conception de la présente invention emploie simultanément dans la même roue les principes de la turbine de l'hélice et du réacteur. Ceux-ci cumulés permettent d'obtenir des poussées axiales beaucoup plus importantes que l'hélice seule. Pour le paramétrage mathématique qui rend dépendants tous les éléments les uns des autres, il est employé des outils informatiques très performants : Pro Engeener Créo, Dassault System Catia, etc.

### Brève description des figures

Les dessins sont fournis à titre indicatif et sont schématisés et simplifiés afin d'illustrer au mieux les textes de la description et des revendications.
- La figure 1 montre le principe dit des 5 paramètres ;
- La figure 2 montre des lames de gavage entre deux rondelles construites avec des creux ou des bombés et sont vrillées ou pas de façon positive, ou négative à la demande en utilisant les 5 paramètres ;
- La figure 3 montre en coupe l'alimentation de fluide énergétique introduit par l'arbre creux et son passage vers le dessous de la roue.
- La figure 4 montre une roue THRE vue de face, les lames étant caractérisées dans quatre secteurs sur la surface d'un cercle ;
- La figure 5 montre un exemple de roue THR réalisée avec les 3 zones ;
- La figure 6 montre la construction de la chambre de la roue THR faite avec des courbes générées à l'infini en faisant évoluer les 5 paramètres « CARPYZ » ;
- La figure 7 montre la construction des chambres de la roue THRE faites avec des courbes générées à l'infini en faisant évoluer les 5 paramètres « CARPYZ » ; et
- La figure 8 montre en coupe l'orientation donnée au fluide à la sortie des pales, par des entretoises définies par les 5 paramètres.

### Description détaillée

La Figure 1 rappelle le principe dit des 5 paramètres.

### CONCEPTION DE LA ROUE "TURBO,HELICO,REACTEUR" THR

Les Roues THR font appel simultanément à trois principes naturels fondamentaux :
---celui de l'hélice dont la pression est fournie par l'énergie cinétique et qui est directement proportionnelle à la vitesse de rotation de la roue, = **HELICE** (bloquée par la limite de Beitz)
---celui des turbines qui utilisent la force centrifuge qui donnent une pression proportionnelle au carré de la vitesse de rotation de la roue, = **TURBO**
---celui d'un jet de fluide, qui s'appuie, sur le sol, et sur les couches limites de fluide situées à proximité et qui l'entourent, comme les fusées où les avions = **REACTEUR.**

Les procédés pour la construction et la fabrication des roues THR sont montrés sur des lignes dites " fibres neutres " représentées sans la matière, qui les habillera après à la demande en diverses matières.

Pour les créer, les construire et les fabriquer, les roues THR sont d'abord conçues et visualisées à l'écran en partant d'une image de base de la roue conçue par « CARPYZ » que l'on peut faire évoluer à l'infini en modifiant les valeurs géométriques et mathématiques et numériques de ses éléments constitutifs, fournis par défaut.

Pour simplification sur les figures fournies, ne figurent pas les éléments de construction des 5 paramètres qui sont fournis au fur et à mesure par le concepteur de la roue dans le cours de sa construction.

Chaque élément des roues THR peut évoluer en utilisant le progiciel spécifique créé par « CARPYZ », appuyé sur un puissant outil informatique qui par paramétrages mathématiques combinent et rendent dépendant tous les éléments constitutifs entre eux. « CARPYZ « pour concevoir et fabriquer ses roues, utilise son principe "dit des 5 paramètres" qui permet de créer à l'infini , des pales de toutes longueurs et des courbes creuses et bombées à la demande, en manipulant seulement cinq valeurs numériques (publication WO2008/012425 ) qui sont
---une valeur pour une figure géométrique qui a un centre, au bord gauche de la pale ,--- une valeur pour une figure géométrique qui a un centre, au bord droit de la pale,-une valeur pour le diamètre d'un cercle placé au centre de la pale pour son corps,-une valeur pour la cambrure déterminée par la position relative des trois cercles précités entre eux, --- et une valeur pour la longueur de la pale donnée entre les 2 centres des 2 bords.

Il est remarquable que les valeurs numériques autorisées par les ordinateurs, permettent de réaliser des bords très fins pouvant aller jusqu'à être coupants, ce qui est difficile à obtenir en utilisant les courbes de Bezier et les Nurbs.

Cette présente invention montre comment sont construites les roues THR en utilisant des principes et lois géométriques et mathématiques connus, mais qui sont associés et employés simultanément où indépendamment de façons complémentaires. Chaque principe s'il est déjà connu par ailleurs, ne peut être considéré comme une opposition suffisante étant sorti du contexte global qui est revendiqué, les éléments de la roue monobloc étant par définition tous dépendants les uns des autres.

La Figure 2 montre en exemple des lames de gavage entre les deux rondelles R1 et R 2 qui sont construites avec des creux ou des bombés et sont vrillées ou pas de façon positive, ou négative à la demande avec les 5 paramètres.

La Figure 3 montre l'alimentation de fluide énergétique introduit par l'arbre creux, qui passe entre la deuxième rondelle et un disque dont l'espace au grand diamètre est bouché par une bague cylindrique qui poursuit la cloison circulaire qui traverse de part en part la pale creuse de l'hélice. La pale traverse la troisième rondelle. Comme on peut le voir en Figure 3, les fluides sont alors orientés par les chambres vers le dessous de la roue.

### ROUE Turbo,Hélico,Réacteur, THRA

Les roues sont symétriques et tournent à la demande à droite ou à gauche.

Les roues sont élaborées sur 3 zones principales séparées par 3 rondelles :
---la première zone permet de faire prendre le fluide aux lames d'introduction dans le milieu ambiant. Chaque lame part d'une première petite rondelle placée à l'avant au centre de la roue, sur laquelle est configuré le petit profil de la lame d'introduction. Une deuxième rondelle décalée vers l'arrière de la roue sur laquelle est configuré le grand profil de la lame d'introduction. Les lames d'introduction sont générées par l'ordinateur entre ces deux premières rondelles et dirigent le fluide vers l'entrée des pales creuses de l'hélice qui est placée sur la deuxième rondelle. Il est aussi remarquable que le profil de la grande lame d'introduction est le même que le profil de la lame de l'extrados de la pale à l'entrée de l'hélice.
---la deuxième zone permet aux pales de l'hélices d'absorber à leur entrée le fluide fourni par la lame d'introduction de la première zone et de le faire migrer dans l'intérieur de leurs pales de l'avant vers l'arrière de la roue en traversant les pales de l'hélice qui sont creuses jusqu'à une troisième rondelle.
--- la troisième zone a au moins une chambre circulaire placée après la troisième rondelle, qui reçoit le fluide à la sortie des pales creuses de l'hélice et le dirige vers l'arrière de la roue, qui par un orifice circulaire calibré et orienté lui permet d'engendrer une force par réaction .

Comme il est indiqué dans la publication WO 2016/110364 A1 , la section de l'entrée du conduit des pales creuses de l'hélice d'une roue, est écrite à l'aide de figures géométriques qui utilisent des portions de cercle construites sur les deux points des extrémités d'une corde fugace . L'une des extrémités de cette corde est positionnée sur le cercle décrit par le bord d'attaque des pales de la roue pendant leur rotation et la corde est angulairement placée de préférence à 45° vis-à-vis d'un rayon de la roue.

Partant d'un centre placé au milieu de cette corde fugace, il est tracé un cercle qui passe par les 2 extrémités de la corde. Il est levé sur ce point de centre, une perpendiculaire qui traverse la corde. Les points de centres qui sont situés à l'intersection du cercle et de la perpendiculaire, permettent de tracer les portions de cercle recherchées, qui ont leurs extrémités qui sont confondues avec celles de la corde fugace.

Les deux portions de cercle obtenues sont à l'entrée de la pale : la lame de l'extrados convexe de la lame pale et la lame de l'intrados concave de la pale, la corde disparait.

### PREMIERE ZONE DE LA ROUE

La roue 'Turbo,Hélico,Réacteur « CARPYZ »' est constituée vue en coupe sur la longueur, par une première zone pourvue de lames destinées à prendre le fluide ambiant et à alimenter l'entrée des pales creuses de l'hélice avec lesquelles elles sont mises en concordance.

Les roues hybrides turbo-hélice ,Turbo ,Hélico, Réacteur, Alimentées, Energétiques, utilisent des lames pour la première zone de la roue qui sont générées en utilisant le principe des 5 paramètres mathématiques (WO 2008 /012425) qui permet de créer des courbes avec seulement 5 valeurs numériques et qui sont appliquées d'abord sur la face intérieure d'une petite rondelle plate, où inclinée, où incurvée. Cette première rondelle est située près du centre à l'avant de la roue. La face arrière de cette petite rondelle est d'abord utilisée pour écrire le profil avalant de la lame. Le bord d'attaque de la lame est placé sur le grand diamètre du cercle de la petite rondelle, et le bord de fuite est placé sur le petit diamètre de la petite rondelle. La deuxième rondelle reçoit un profil voisin de celui de la lame envoyée par la première rondelle de la roue, qui va tomber en concordance avec la lame de l'extrados de la pale. Le vrillage de la lame est obtenu à la demande par un décalage angulaire voulu entre les deux premières rondelles.

### DEUXIEME ZONE DE LA ROUE

La roue "Turbo,Hélico,Réacteur " est constituée vue en coupe sur la longueur, par une deuxième zone qui est occupée par les pales de l'hélice qui sont destinées à transférer le fluide ambiant qui entoure la roue de l'avant vers l'arrière. Les profils donnés aux pales sont à la demande droit bombé ou creux, et sont droits ou vrillés en + ou - par décalage angulaire des rondelles entre elles.

### TROISIEME ZONE DE LA ROUE

La roue "Turbo,Hélico,Réacteur " est constituée vue en coupe sur la longueur, par une troisième zone placée à l'arrière de la roue, qui est constituée d'au moins une chambre circulaire placée derrière une troisième rondelle. Elle reçoit le fluide fourni par le creux des pales de l'hélice à leur grand diamètre. Cette Chambre est pourvue dessous d'une fente calibrée dirigée vers l'arrière de la roue, tout autour à sa périphérie.

La Figure 4 montre , à titre d'exemple, une roue THRE vue de face avec les lames caractérisées dans chaque secteur La Figure 4 secteur A montre sur la surface d'une portion de cercle de la roue vue de face dont le sens de rotation indiqué est à droite, et sur le secteur A au centre sur la petite rondelle R1 le profil d'une petite lame avalante (barrée d'un trait) qui a son bord d'attaque en ligne, sans décalage angulaire avec le bord d'attaque de l'extrados de l'entrée de la pale (barrée d'un trait), montrée sur la 2^{ème} rondelle R2.

Il n'y a pas non plus de décalage angulaire avec le bord d'attaque de la pale de l'extrados à l'arrivée dans la chambre comme montrée sur la troisième rondelle R3 (barré d'un trait). L'intrados est concave sur R2 et convexe sur R3.

Cette Figure 4 montre également les portions de la couronne de la chambre circulaire de la troisième zone qui coiffent la périphérie de la roue. Elles sont délimitées par les bords d'attaque et de fuite de chaque pale à son arrivée sur la chambre. Sur le Secteur A rondelle R2 figure le tracé géométrique utilisé pour l'introduction du fluide à l'entrée de la pale de l'hélice.

La Figure 4 secteur B montre sur la surface d'un cercle la roue vue de face, la mutation concave/convexe de l'intrados qui est faite au milieu de la lame par 2 demies lames, l'une partant de R2 et l'autre aboutissant sur R3, et qui se retrouvent au centre et se chevauchent très légèrement.

La Figure 4 secteur C montre la roue vue de face, une pale vrillée en avant en avalant. La Figure 4 secteur D montre la roue vue de face, une pale vrillée en arrière en fuyant, et l'intrados concave en pointillé, convexe ou plate.

La Figure 5 montre un exemple de roue réalisée avec les 3 zones .

La Figure 6 montre la construction de la chambre de la roue THR faite avec des courbes générées à l'infini en faisant évoluer les 5 paramètres CARPYZ selon l'angle d'appuis de la longueur, et les autres paramètres longueur, diamètre, etc.

La Figure 7 montre la construction des chambres de la roue THRE faites avec des courbes générées à l'infini en faisant évoluer les 5 paramètres CARPYZ : angle d'appuis de la longueur, longueur, diamètre, etc.

La Figure 8 montre en coupe l'orientation donnée au fluide à la sortie des pales, par des entretoises définies par les 5 paramètres.

Selon la méthode de conception, de construction et de fabrication d'une roue Turbo,Hélico,Réacteur (THR) de l'invention , le squelette de la roue qui est monobloc est construit à l'aide d'un Progiciel « CARPYZ », qui fournit une image de base ou tous les éléments constitutifs essentiels sont cités avec des valeurs numériques et arithmétiques qui sont fournies par défaut, en utilisant le principe « CARPYZ » des 5 paramètres.

Cette image est créée par le Progiciel « CARPYZ » avec des valeurs fournies de façon intuitive selon des roues déjà réalisées mais peuvent évoluer à l'infini selon l'utilisation espérée de la roue conçue (exemple : diamètres, nombre de pales, forme des pales, profil des chambres, etc..) en utilisant en continu le principe « CARPYZ » des 5 paramètres (publication WO2008/012425) .Cette image montre une première zone (1) destinée au gavage de l'entrée des pales creuses de l'hélice par des lames, dont le profil est conçu sur la face arrière d'une première petite rondelle, dont les diamètres sont fournis par défaut, positionnée sur l'axe à l'avant de la roue (4 R1).

Si la roue vue de face tourne à droite dans le sens des aiguilles d'une montre, le bord droit de la lame est placé sur le grand diamètre de la rondelle et le bord gauche de la longueur de la lame est placé sur le petit diamètre de la rondelle et décalé angulairement en arrière. Les valeurs, des bords, du corps, du décalage angulaire entre les bords, de la longueur, et de la cambrure, sont des valeurs fournies par défaut pour la lame, et sont corrigées à sa demande par le concepteur de la roue.

Un autre profil de lame voisin du précédent est aussi écrit avec les 5 paramètres sur la face avant d'une deuxième rondelle plus grande, (4 R2 A). La lame est générée par l'ordinateur entre les deux profils avec les 5 paramètres. Une valeur est donnée pour la distance qui sépare les deux rondelles et le décalage angulaire entre les deux rondelles qui permet de vriller positivement ou négativement les lames, sont fournies par défaut et sont corrigés par le concepteur. Les lames sont alors dites neutres, ou avalantes ou en retraits. Le grand profil de la lame d'introduction se raccorde et est confondu avec celui de l'extrados de l'entrée de la pale de l'hélice qui est aussi soumis aussi aux 5 paramètres.

L'entrainement en rotation de la roue, est fait par un arbre solidarisé avec le centre de la deuxième rondelle, et tourne selon le sens de rotation choisi. Cette première résolution montre comment est construit l'avant de la roue qui est indissociable de la roue monobloc.

La méthode de conception pour la fabrication de roue Turbo,Hélico,Réacteur (THR) de la présente invention emploie simultanément dans la même roue les principes de la turbine de l'hélice et du réacteur. Ceux-ci cumulés permettent d'obtenir des poussées axiales beaucoup plus importantes que l'hélice seule. Pour le paramétrage mathématique qui rend dépendants tous les éléments les uns des autres, des outils informatiques très performants, tels que Pro Engeener Créo, Dassault System Catia, etc., peuvent être utilisés.

Dans une réalisation préférée, sur la face arrière de la deuxième rondelle est positionnée l'entrée des pales creuses de l'hélice qui constituent la deuxième zone (2) de la roue . Les lames d'introduction de la première zone sont confondues avec les lames de l'extrados des pales qui sont également soumises aux 5 paramètres. Au petit diamètre des pales de l'hélice, se trouve l'entrée du fluide (publication WO/2016/110364). Au grand diamètre des pales de l'hélice se trouve la sortie du fluide. Les pales sont constituées de 2 lames et le fluide qu'elles conduisent débouche à leur grand diamètre dans au moins une chambre circulaire qui est la troisième zone (3). Une valeur est donnée pour la distance qui sépare la deuxième et la troisième rondelle et le décalage angulaire entre les deux rondelles qui permet de vriller positivement ou négativement les lames, sont fournies par défaut et sont corrigés par le concepteur. Les lames sont alors dites neutres, ou avalantes ou en retraits. La lame extrados de la pale est convexe à l'entrée de la pale et à la sortie de la pale (Fig 4, A,R1,2,3). La lame intrados de la pale est concave à l'entrée de la pale et convexe, plate ou convexe à la sortie de la pale (Fig 4, R3,D,D').

Préférentiellement, la mutation concave /convexe de la lame intrados de la pale de l'hélice se fait vers le milieu de sa longueur. Elle est coupée en deux demies-pales qui utilisent les 5 paramètres, la première concave part de la deuxième rondelle et l'autre convexe arrive sur la troisième rondelle, et elles se retrouvent vers le centre en se chevauchant légèrement l'une sur l'autre.

Dans une réalisation préférée, les pales de l'hélice arrivent sur la face avant de la troisième rondelle qu'elles traversent. Le bord droit de la pale est placé sur le grand diamètre de la rondelle. Le bord gauche de la pale est placé sur le petit diamètre de la rondelle. La longueur des pales est donnée par la portion angulaire des rondelles, dans laquelle elles s'inscrivent. Cette portion est en principe déterminée par la valeur des 360 ° de la circonférence de la roue, divisée par le nombre de pales, car de préférence les pales se jouxtent bord à bord et ne se recouvrent pas entre elles au niveau des bords. Toutefois cette valeur peut être modifiée en connaissance de cause par le concepteur. Les valeurs des petits et grands diamètres de la troisième rondelle définissent l'angle d'attaque des pales dans le fluide et sont données par défaut et corrigeables à la demande par le concepteur. Les diamètres des portions de cercles qui construisent l'intrados et l'extrados des lames, sont donnés par défaut et corrigés à la demande par le concepteur de la roue.

Préférentiellement, à leur plus grand diamètre, les pales de l'hélice en arrivant sur la troisième rondelle ont leurs lames intrados et extrados qui se solidifient avec cette rondelle en la traversant. Les pales distribuent au moins un fluide dans au moins une chambre périphérique dans lesquelles elles débouchent. Au moins une chambre est formée par les espaces circulaires contenus entre les portions de cercle circulaires écrites par le concepteur.

Une ligne droite qui sert de référence est tracée entre le grand et le petit diamètre du bord de la troisième rondelle et est poursuivi vers le centre de la roue à une valeur fournie par défaut et corrigeable à la demande.

Une première grande portion de cercle est construite avec l'image des 5 paramètres dont le bord gauche de la longueur de la pale devient un centre, qui est positionné sur le grand diamètre de la troisième rondelle. Un angle d'une valeur choisie qui va de 0 à 90°, s'écrit entre la droite de référence précitée et la droite de la longueur de la pale donnée avec toutes les valeurs des 5 paramètres qui sont fournies par défaut et qui sont corrigeables à la demande par le concepteur. Une deuxième portion de cercle est construite avec l'image des 5 paramètres dont le bord gauche de la longueur de la pale devient un centre, qui est positionné sur le petit diamètre de la troisième rondelle. Un angle d'une valeur choisie qui va de 0 à 90°, s'écrit entre la droite de référence précitée et la droite de la longueur de la pale donnée avec toutes les valeurs des 5 paramètres qui sont fournies par défaut et qui sont corrigeables à la demande par le concepteur. Un petit demi-cercle est écrit sur la droite de référence, dont le centre est positionné a une distance du précédent centre cité, et est fournie par défaut, avec son diamètre. Entre les portions de cercle sont positionnées des entretoises profilées et orientées afin de faire écouler le fluide dans le même sens que le veut la roue pour tourner. Entre la deuxième portion de cercle et le petit demi-cercle sont placées des entretoises radiales.

Dans une réalisation préférée, la roue "turbo ,helico, reacteur hybride, est une roue "alimentée" par un fluide très énergétique complémentaire introduit par l'extérieur de la roue "THRE". Cette roue qui est hybride peut utiliser simultanément l'hélice et le turbo qui agit pour sa première partie avec le fluide ambiant, et pour sa seconde partie emploie en complément un fluide à fort potentiel énergétique qui est introduit à l'arrière ou à l'avant de la roue par le centre d'un arbre creux qui assure également la rotation de la roue.

Ces roues hybrides THRE véhiculent des fluides ambiants et emploient en complément du turbo réacteur de la roue qui agit avec le fluide ambiant, un fluide très énergétique étant introduit par l'arbre central de la roue qui est creux. Ce fluide entre dans l'arbre creux à l'arrière de la roue. Ensuite il est conduit jusqu'à l'entrée des pales de l'hélice qui sont creuses et qui sont partagées en deux parties séparées, où par une cloison verticale radiale, où par une cloison circulaire, qui sont poursuivies sur toute la longueur à l'intérieur de la pale. La deuxième rondelle de la roue, voit son petit diamètre diminuer vers le centre de la roue et va jusqu'à se solidariser avec l'extérieur du tube de l'arbre creux qui est coupé à cet endroit et qui apporte le fluide à fort potentiel énergétique. Un disque est placé vers l'avant de la roue, un peu avant la deuxième rondelle (FIG 3).. Il part de l'axe de la roue et crée entre deux un espace qui est fermé par une bague cylindrique qui poursuit la cloison circulaire ou coiffe les cloisons verticales radiales citées ci-dessus et qui partagent les pales d'hélice creuses. Des entretoises radiales sont placées dans l'entre deux de l'espace cité ci-dessus.

Dans une réalisation préférée, la méthode de conception pour la fabrication de roue Turbo,Hélico,Réacteur Hybride (THRE) qui emploie un fluide énergétique en complément, est remarquable par le fait que, en arrivant à leur plus grand diamètre les pales creuses solidarisent leur extrados et leur intrados en traversant la troisième rondelle. Elles distribuent leurs fluides dans des chambres périphériques qui suivent les lames intrados et extrados et les cloisons contenues dans des pales creuses. Ces chambres sont formées par les espaces circulaires contenus, entre les trois portions de cercle.

Une ligne droite qui sert de référence est tracée entre le grand et le petit diamètre du bord de la troisième rondelle et est poursuivi vers le centre de la roue à une valeur fournie par défaut et corrigeable à la demande.

Une première grande portion de cercle est construite avec l'image des 5 paramètres dont le bord gauche de la longueur de la pale devient un centre, qui est positionné sur le grand diamètre de la troisième rondelle. Un angle d'une valeur choisie qui va de 0 à 90°, s'écrit entre la droite de référence précitée et la droite de la longueur de la pale donnée avec toutes les valeurs des 5 paramètres qui sont fournies par défaut et qui sont corrigeables à la demande par le concepteur.

Une deuxième portion de cercle est construite avec l'image des 5 paramètres dont le bord gauche de la longueur de la pale devient un centre, qui est positionné sur le petit diamètre de la troisième rondelle. Un angle d'une valeur choisie qui va de 0 à 90°, s'écrit entre la droite de référence précitée et la droite de la longueur de la pale donnée avec toutes les valeurs des 5 paramètres qui sont fournies par défaut et qui sont corrigeables à la demande par le concepteur.

Une autre portion de cercle est construite avec l'image des 5 paramètres dont le bord gauche de la longueur de la pale devient un centre, qui est positionné à l'arrivée des cloisons sur la troisième rondelle. Un angle d'une valeur choisie qui va de 0 à 90°, s'écrit entre la droite de référence précitée et la droite de la longueur de la pale donnée avec toutes les valeurs des 5 paramètres qui sont fournies par défaut et qui sont corrigeables à la demande par le concepteur. Entre les portions de cercle sont positionnées des entretoises profilées et orientées afin de faire écouler le fluide dans le même sens que le veut la roue pour tourner (FIG4). Entre la deuxième et la troisième portion de cercle sont placées des entretoises radiales.

Préférentiellement, pour cette disposition de roue hybride THRE qui emploie un fluide énergétique en complément, partant du creux de l'arbre le fluide énergétique est introduit dans des tubes qui suivent le chemin décrit en passant dans les pales creuses de l'hélice et aboutissent dans les chambres circulaires situées entre la deuxième et la troisième portion de cercle adaptées par le concepteur pour les recevoir.

Préférentiellement, selon cette méthode de conception pour la fabrication de roue Turbo,Hélico,Réacteur Hybride (THRE), par les conduits habituellement réservé pour l'écoulement des fluides à fort potentiel énergétique sont passés des conducteurs électriques qui aboutissent au niveau des chambres périphériques et sont positionnés pour délivrer l'énergie nécessaire pour par exemple amorcer un arc et/ou éclairer une diode électro- luminescente.

Le nouveau principe consiste à prendre le fluide au centre à l'entrée d'une roue et à le faire traverser les pales des hélices qui sont creuses en bénéficiant de la force centrifuge et aboutir dans une chambre circulaire périphérique pourvue d'un orifice circulaire qui éjecte le fluide vers le dessous de la roue en créant une force de réaction par appui sur les couches limites de fluide situées à proximité. L'addition des trois principes permet d'augmenter de façon sensible la poussée axiale d'autant plus qu'elle est augmentable de façon énorme par un fluide énergétique introduit par l'arbre dans le réacteur tel que de l'air comprimé voire de l'hydrogène comme pour les fusées.

Une caractéristique préférée de cette méthode comporte le fait que les fibres neutres sont habillées de matière, en utilisant le principe de la publication de Brevet WO 2008/012425 (principe « CARPYZ » des 5 paramètres) qui construit l'aire d'une pale avec seulement 5 paramètres ou valeurs mathématiques données à des portions de figures géométriques qui ont un centre de référence, et sont placés de préférence en concordance, ou à proximité, des valeurs fournies par les fibres neutres générées selon la présente méthode. En particulier, les fibres neutres sont habillées de matière, en utilisant le principe des 5 paramètres donné par la publication WO 2008/012425, et en employant comme base les valeurs numériques données par les fibres neutres pour placer la matière de part et d'autre de la fibre ou en la recouvrant au moins partiellement.

La méthode de conception de la présente invention emploie simultanément dans la même roue les principes de la turbine de l'hélice et du réacteur. Ceux-ci cumulés permettent d'obtenir des poussées axiales beaucoup plus importantes que l'hélice seule. Pour le paramétrage mathématique qui rend dépendants tous les éléments les uns des autres, il est employé des outils informatiques très performants : Pro Engeener Créo, Dassault System Catia, etc.

La présente invention n'est en aucune manière limitée à la forme de réalisation décrite à titre d'exemple et représentée dans les figures. On pourra y apporter de nombreuses modifications de détails, de formes, et de dimensions sans sortir pour cela du cadre de l'invention, celle-ci étant définie uniquement par les revendications. La présente invention a été décrite en relation avec des modes de réalisations spécifiques, qui ont une valeur purement illustrative et ne doivent pas être considérés comme limitatifs. Les numéros de référence dans les revendications ne limitent pas leur portée.

## Revendications

1. Méthode de conception, de construction et de fabrication d'une roue Turbo,Hélico,Réacteur, (THR), pour tous fluides dans laquelle:
le squelette de la roue est construit entre trois rondelles (Fig 3,R1 -R2- R3),
les trois rondelles (Fig 3,R1 -R2- R3) étant concentriques à l'axe de rotation et espacées axialement l'une de l'autre dans le sens axial général de l'écoulement,
la roue comprend 3 zones, dont l'amont (Fig 3, AV) de la roue constitue une première zone (1) de l'entrée du fluide , dont l'hélice (Fig 5, 2) constitue une deuxième zone (2), et dont une chambre périphérique (Fig 5, 3) 2- du côté aval de la roue constitue une troisième zone (3), laquelle chambre agit, par des fentes circulaires périphériques, comme un réacteur,
la première zone (1) s'étendant axialement de la première rondelle (R1) à la deuxième rondelle (R2), la deuxième zone (2) s'étendant axialement de la deuxième rondelle (R2) à la troisième rondelle (R3), et la troisième zone (3) s'étendant axialement à partir de la troisième rondelle (R3) dans la direction aval,
dans la première zone (1) des lames s'étendent axialement entre la première rondelle (R1) et la deuxième rondelle (R2), dans la deuxième zone (2) des pales de l'hélice, creuses, s'étendent axialement entre la deuxième rondelle (R2) et la troisième rondelle (R3) , l'intérieur de chacune de ces pales creuses ayant une entrée située dans le plan de la deuxième rondelle (R2),
les pales creuses des hélices sont aptes à distribuer au moins un fluide dans au moins une chambre périphérique dans laquelle débouchent des conduits intérieurs de ces pales (fig. 3),
une certaine géometrie du squelette est définie en utilisant le principe « CARPYZ » dit des 5 paramètres (FIG 1) 2- qui permet de créer des pales de toutes longueurs et des courbes creuses et bombées en manipulant seulement cinq valeurs numériques qui sont
-- une valeur pour une figure géométrique qui a un centre, au bord gauche de la pale,
-- une valeur pour une figure géométrique qui a un centre, au bord droit de la pale,
-- une valeur pour le diamètre d'un cercle placé au centre de la pale pour son corps,
-- une valeur pour la cambrure déterminée par la position relative des trois cercles précités entre eux,
-- et une valeur pour la longueur de la pale donnée entre les 2 centres des 2 bords, lequel principe permettant également de marier à volonté des courbes entre elles en superposant les centres entre eux,
- la première zone (Fig 5, 1) favorise la pénétration du fluide dans l'entrée des pales creuses de l'hélice (Fig 4, A R2),
- le profil d'une lame de la première zone (Fig 5, 1) est conçu sur la face aval de la première rondelle placée à l' amont de la roue (Fig 3,R1), dont les diamètres sont fournis par défaut, positionnée sur l'axe à l' amont de la roue (Fig 4 ,R1 et Fig 2,R1) ,
- un autre profil de lame voisin du précédent est projeté avec les 5 paramètres (Fig 4, R2) sur la face amont de la deuxième rondelle (Fig 4, R2 A),
- la lame est générée entre les profils des deux rondelles avec les 5 paramètres, des valeurs étant données pour la distance qui sépare les deux rondelles et pour le décalage angulaire entre les deux rondelles qui permet de vriller les lames, positivement ou négativement, ces valeurs étant fournies par défaut et corrigées par le concepteur, les lames étant alors dites neutres, ou avalantes ou en retraits,
- l'entrainement en rotation de la roue est fait par un arbre solidarisé avec le centre à l' aval de la roue selon le sens de rotation choisi (Fig 4, Rot), d'où est construit l' amont de la roue qui est solidaire de l'aval de la roue (Fig 5,1-2-3),
**caractérisée en ce que** :
(i) - le squelette de la roue construit entre les 3 rondelles (Fig 3,R1-R2- R3) à l'aide d'un Progiciel spécifique, qui fournit une image de base (Fig 5) où tous les éléments constitutifs de la roue sont cités avec des valeurs numériques et arithmétiques qui sont fournies de façon non exhaustive par défaut, cette image étant créée de façon arbitraire par le Progiciel,
- avec l'image montrée à l'écran sont fournies des valeurs déterminées de façon intuitive, selon des roues déjà réalisées mais qui peuvent évoluer à l'infini selon l'utilisation espérée de la roue conçue (exemple : diamètres, nombre de pales, forme des pales, profil des chambres, etc..), en utilisant en continu le principe « CARPYZ » dit des 5 paramètres (FIG. 1),
- cette image de base montre les lames de la première zone (Fig 5, 1), et une telle lame est générée par l'ordinateur entre les profils des deux rondelles avec les 5 paramètres,
(ii) - lors de la conception du profil d'une lame de la première zone sur la face aval de la première rondelle, si la roue est vue dans une direction parallèle à l'axe de rotation et tourne dans
le sens des aiguilles d'une montre (Fig 4,Rot), le bord avant de la lame est placé sur
le grand diamètre de la rondelle et le bord arrière de la lame est placé sur le petit
diamètre de la rondelle et est décalé angulairement en arrière, 5 - les valeurs du décalage angulaire entre les bords avant et arrière de la lame et de sa cambrure sont des valeurs fournies par défaut, avec les 5 paramètres et sont corrigées à sa demande par le concepteur de la roue,
(iii) sur la deuxième rondelle (Fig. 4, R2 A) sont définis l'intrados (Fig. 4, R2 Int) et l'extrados (Fig. 4, R2 Ext) de l'entrée des pales de l'hélice, et le profil d'une lame de la première zone sur la deuxième rondelle (Fig 4, R2) se raccorde et est de préférence confondu avec celui de l'extrados (Fig 4, R2 Ext) de l'entrée d'une pale de l'hélice, lequel profil d'extrados étant aussi soumis aux 5 paramètres, et à leur plus grand diamètre, les pales de l'hélice en arrivant sur la troisième rondelle ont leurs lames intrados et extrados qui se solidifient avec cette rondelle en la traversant,
(iv) et **en ce que**, vue en coupe par un plan méridional contenant l'axe de rotation (fig. 3), la au moins une chambre circulaire périphérique dans laquelle débouchent des conduits intérieurs des pales de l'hélice est formée par un espace contenu des portions de cercle (fig. 3, C) définies par le concepteur de la façon suivante :
- des segments de droite qui servent de références comme longueur support pour les 5 paramètres, sont tirés en partant de points placés sur le bord du grand et du petit diamètre de la troisième rondelle (Fig 6, L1 ,L2), et sont poursuivis vers le centre de la roue à une valeur angulaire (Fig 6, α) de 0 à 90° vis-à-vis de la face de la troisième rondelle, lesquelles valeurs angulaires sont fournies par défaut comme les autres valeurs des 5 paramètres qui sont aussi corrigeables à la demande,
- au centre de ces segments sont placées des perpendiculaires (Fig 6, P1,P2) sur lesquelles le concepteur place les centres desdites portions de cercles qui rejoignent les deux extrémités des segments.

2. Méthode de conception, de construction et de fabrication d'une roue Turbo,Hélico,Réacteur, (THR) selon la revendication précédente, **caractérisée en ce que** :
sur la face aval de la deuxième rondelle est positionnée l'entrée des pales creuses de l'hélice qui constituent la deuxième zone (2) de la roue, les lames de la première zone sont mises en concordance avec les lames de l'extrados (Fig 4, R2 Ext) des pales (FIG 4, A) qui sont également adaptées aux 5 paramètres,
au petit diamètre des pales, se trouve l'entrée du fluide et au grand diamètre des pales se trouve la sortie du fluide,
les pales sont constituées de 2 lames et débouchent à leur grand diamètre dans une chambre circulaire située à l'arrière et qui est la troisième zone (FIG 5, 3).
la lame extrados (Fig 4, R2 Ext) de la pale , vue axialement sur un plan de coupe orthoaxial, est convexe à l'entrée de la pale et à la sortie de la pale (FIG 4 R3 A),et la lame intrados (Fig 4 R2 Int) de la pale , vue axialement sur un plan de coupe orthoaxial, est concave à l'entrée de la pale et convexe à la sortie de la pale (Fig 4, R3 Int).

3. Méthode de conception, de construction et de fabrication d'une roue Turbo, Hélico, Réacteur, (THR) selon l'une des revendications précédentes, **caractérisée en ce que** :
les pales de l'hélice débouchent sur la face amont de la troisième rondelle (Fig 3, R3) qu'elles traversent,
le bord droit de la pale (Fig4, R3 A B C D ) , vu axialement sur un plan de coupe orthoaxial, est placé sur le grand diamètre de la rondelle et le bord gauche de la pale (Fig 4, R3 A C D ), vu axialement sur un plan de coupe orthoaxial, est placé sur le petit diamètre de la rondelle,
la longueur des pales est donnée par la portion angulaire des rondelles dans laquelle elles s'inscrivent, cette portion est en principe déterminée par la valeur des 360 ° de la circonférence de la roue, divisée par le nombre de pales, car de préférence les pales se jouxtent bord à bord et ne se recouvrent pas entre elles au niveau des bords, cette valeur pouvant toutefois être modifiée en connaissance de cause par le concepteur.

4. Méthode de conception, de construction et de fabrication d'une roue Turbo,Hélico,Réacteur, (THR) qui véhicule des fluides ambiants, la roue étant une roue hybride THRE, qui emploie un fluide très énergétique en complément, selon l'une des revendications précédentes, **caractérisée en ce que** :
la roue hybride THRE emploie en complément du turbo réacteur de la roue qui agit avec le fluide ambiant, un fluide très énergétique qui est introduit par l'arbre central de la roue qui est creux,
ce fluide entre dans l'arbre creux à l' aval de la roue et ensuite il est conduit jusqu'à l'entrée des pales de l'hélice qui sont creuses et qui sont partagées en deux parties séparées (Fig 3, Ps1, Ps2) avec une cloison verticale radiale, ou par une cloison circulaire, qui sont poursuivies sur toute la longueur à l'intérieur de la pale,
la deuxième rondelle de la roue, voit son petit diamètre diminuer vers le centre de la roue et va jusqu'à se solidariser avec l'extérieur du tube de l'arbre creux qui est coupé à cet endroit et qui apporte le fluide à fort potentiel énergétique,
un disque est placé vers l' amont de la roue, un peu en amont la deuxième rondelle (FIG3 d), ce disque part de l'axe de la roue et crée entre deux un espace qui est fermé par une bague cylindrique (FIG3, b) qui poursuit la cloison circulaire ou coiffe lesdites cloisons verticales radiales qui partagent les pales d'hélice creuses,
des entretoises radiales sont placées dans l'entre deux dudit espace .

5. Méthode de conception, de construction et de fabrication d'une roue Turbo,Hélico,Réacteur Hybride (THRE) qui emploie un fluide énergétique en complément qui traverse les pales creuses, selon la revendication 4, **caractérisée en ce que** :
une première grande portion de cercle est construite avec l'image des 5 paramètres dont l'extrémité de la ligne droite devient un centre qui est positionné sur le grand diamètre de la troisième rondelle (Fig3, C),
un angle (α) d'une valeur choisie qui va de 0 à 90°, s'écrit entre la droite de référence précitée et la droite de la longueur de la lame donnée avec toutes les valeurs des 5 paramètres qui sont fournies par défaut et qui sont corrigeables à la demande par le concepteur.
une deuxième portion de cercle est construite avec l'image des 5 paramètres de la même façon avec l'extrémité de la ligne droite qui devient un centre qui est positionné sur le petit diamètre de la troisième rondelle (Fig 6 C),
un angle (α) d'une valeur choisie qui va de 0 à 90°, s'écrit entre la droite de référence précitée et la droite de la longueur de la lame donnée avec toutes les valeurs des 5 paramètres qui sont fournies par défaut et qui sont corrigeables à la demande par le concepteur,
une autre portion de cercle est construite avec l'image des 5 paramètres de la même façon avec l'extrémité de la ligne droite, qui devient un centre qui est positionné sur l'arrivée de la cloison précitée, sur la troisième rondelle (Fig 7).
un angle (α) d'une valeur choisie qui va de 0 à 90°, s'écrit entre la droite de référence précitée et la droite de la longueur de la lame donnée avec toutes les valeurs des 5 paramètres qui sont fournies par défaut et qui sont corrigeables à la demande par le concepteur,
entre les portions de cercle sont positionnées des entretoises profilées et orientées afin de faire écouler le fluide dans le même sens que le veut la roue pour tourner (FIG 8), et entre la deuxième et la troisième portion de cercle sont placées des entretoises radiales.

6. Méthode de conception, de construction et de fabrication d'une roueTurbo,Hélico,Réacteur Hybride (THRE) qui emploie un fluide énergétique en complément, selon la revendication 4 ou 5, **caractérisée en ce que** :
partant du creux de l'arbre, le fluide énergétique est introduit dans des tubes qui suivent le chemin décrit qui passent dans les pales creuses de l'hélice et aboutissent dans les chambres circulaires situées entre la deuxième et la troisième portion de cercle adaptées par le concepteur pour recevoir les fluides.

7. Méthode de conception, de construction et de fabrication d'une roue Turbo,Hélico,Réacteur Hybride (THRE) qui emploie un fluide énergétique en complément, selon l'une des revendications 4 à 6, **caractérisée en ce que** :
par les conduits habituellement réservé pour l'écoulement des fluides à fort potentiel énergétique sont passés des conducteurs électriques qui aboutissent au niveau des chambres périphériques et sont positionnés pour délivrer l'énergie nécessaire pour amorcer un arc électrique et/ou éclairer une diode électro- luminescente.

8. Méthode de conception, de construction et de fabrication d'une roue Turbo,Hélico,Réacteur, (THR) selon l'une des revendications précédentes, **caractérisée en ce que** :
l'ensemble de la roue y compris les rondelles (Fig 4, R1 R2 R3) est construit en utilisant le principe des 5 paramètres dans son intégralité et permet d'obtenir à l'aide de valeurs de cercles infiniment petits des bords coupants nécessaires pour la pénétration des pales et des lames dans les produits, d'où en utilisant des cercles de tous diamètres ( FiG1 , 1,2,3) et des droites (4,5) il est permis de donner à volonté des épaisseurs de matière aux lames et aux pales. la cambrure pouvant aussi être inversée et être positive ou négative.

## Patentansprüche

1. Verfahren zur Auslegung, Konstruktion und Herstellung eines Turbo-Heliko-Reaktor (THR) Laufrads für alle Fluide, wobei:
das Skelett des Laufrads zwischen drei Scheiben (Fig. 3, R1 - R2 - R3) konstruiert ist, wobei die drei Scheiben (Fig. 3, R1 - R2 - R3) konzentrisch zur Rotationsachse und in der allgemeinen axialen Strömungsrichtung axial voneinander beabstandet sind, das Laufrad 3 Zonen umfasst, von denen die stromaufwärts gelegene (Fig. 3, AV) des Laufrads eine erste Zone (1) des Fluideingangs bildet, dessen Rotor (Fig. 5, 2) eine zweite Zone (2) bildet und
dessen periphere Kammer (Fig. 5, 3) auf der stromabwärtigen Seite des Laufrads eine dritte Zone (3) bildet, wobei diese Kammer durch periphere kreisförmige Schlitze wie ein Reaktor wirkt,
die erste Zone (1) sich axial von der ersten Scheibe (R1) zur zweiten Scheibe (R2) erstreckt, die zweite Zone (2) sich axial von der zweiten Scheibe (R2) zur dritten Scheibe (R3) erstreckt, und die dritte Zone (3) sich axial ab der dritten Scheibe (R3) in der stromabwärtigen Richtung erstreckt,
in der ersten Zone (1) sich Lamellen axial zwischen der ersten Scheibe (R1) und der zweiten Scheibe (R2) erstrecken, in der zweiten Zone (2) sich hohle Rotorblätter axial zwischen der zweiten Scheibe (R2) und der dritten Scheibe (R3) erstrecken, wobei das Innere jedes dieser hohlen Blätter einen Eingang aufweist, der sich in der Ebene der zweiten Scheibe (R2) befindet,
die hohlen Blätter der Rotoren geeignet sind, mindestens ein Fluid in mindestens einer peripheren Kammer zu verteilen, in die innere Kanäle dieser Blätter münden (Fig. 3), eine bestimmte Geometrie des Skeletts definiert wird, indem das sogenannte "CARPYZ"-Prinzip der 5 Parameter (Fig. 1) verwendet wird, das es ermöglicht, Blätter aller Längen, und hohle und gewölbte Kurven zu erzeugen, indem nur fünf numerische Werte manipuliert werden, die da sind
-- ein Wert für eine geometrische Figur, die einen Mittelpunkt am linken Rand des Blatts aufweist,
-- ein Wert für eine geometrische Figur, die einen Mittelpunkt am rechten Rand des Blatts aufweist,
-- ein Wert für den Durchmesser eines Kreises, der im Mittelpunkt des Blatts für seinen Körper platziert ist,
-- ein Wert für die Wölbung, die durch die relative Position der drei vorstehend erwähnten Kreise zwischen ihnen bestimmt wird,
-- und ein Wert für die Länge des Blatts, die zwischen den 2 Mittelpunkten der 2 Ränder angegeben wird, wobei dieses Prinzip es auch ermöglicht, Kurven nach Belieben zwischen ihnen zu vereinen, indem die Mittelpunkte zwischen ihnen überlagert werden,
- die erste Zone (Fig. 5, 1) das Eindringen des Fluids in den Eingang der hohlen Rotorblätter (Fig. 4, A R2) begünstigt,
- das Profil einer Lamelle der ersten Zone (Fig. 5, 1) auf der stromabwärtigen Seite der ersten Scheibe ausgelegt ist, die stromaufwärts des Laufrads (Fig. 3, R1) platziert ist, deren Durchmesser standardmäßig bereitgestellt werden, die auf der Achse stromaufwärts des Laufrads (Fig. 4, R1 und Fig. 2, R1) positioniert ist,
- ein anderes Lamellenprofil ähnlich dem vorherigen mit den 5 Parametern (Fig. 4, R2) auf die stromaufwärtige Seite der zweiten Scheibe (Fig. 4, R2 A) projiziert wird,
- die Lamelle zwischen den Profilen der zwei Scheiben mit den 5 Parametern erzeugt wird, wobei Werte für den Abstand, der die zwei Scheiben trennt, und für den Winkelversatz zwischen den zwei Scheiben gegeben werden, der es ermöglicht, die Lamellen positiv oder negativ zu verdrehen, wobei diese Werte standardmäßig bereitgestellt und vom Entwickler korrigiert werden, wobei die Lamellen dann als neutral oder stromabwärts oder zurückgesetzt bezeichnet werden,
- der Rotationsantrieb des Laufrads durch eine Welle erfolgt, die mit dem Mittelpunkt an der stromabwärtigen Seite des Laufrads gemäß der gewählten Rotationsrichtung fest verbunden ist (Fig. 4, Rot), von wo aus die stromaufwärtige Seite des Laufrads konstruiert ist, die fest mit der stromabwärtigen Seite des Laufrads verbunden ist (Fig. 5, 1-2-3), **dadurch gekennzeichnet, dass**:
(i) - das Skelett des Laufrads zwischen den drei Scheiben (Fig. 3, R1 - R2 - R3) mithilfe eines speziellen Softwarepakets konstruiert wird, das ein Basisbild (Fig. 5) liefert, in dem alle Bestandteile des Laufrads mit numerischen und arithmetischen Werten aufgeführt sind, die standardmäßig nicht vollständig bereitgestellt werden, wobei dieses Bild vom Softwarepaket willkürlich erstellt wird,
- mit dem auf dem Bildschirm gezeigten Bild intuitiv bestimmte Werte bereitgestellt werden, gemäß bereits realisierter Laufräder, die sich jedoch je nach der erhofften Verwendung des entworfenen Laufrads unendlich weiterentwickeln können (Beispiel: Durchmesser, Anzahl von Blättern, Form der Blätter, Profil der Kammern usw.), wobei kontinuierlich das sogenannte "CARPYZ"-Prinzip der 5 Parameter (Fig. 1) verwendet wird,
- dieses Grundbild die Lamellen der ersten Zone (Fig. 5, 1) darstellt, und eine derartige Lamelle vom Computer zwischen den Profilen der zwei Scheiben mit den 5 Parametern erzeugt wird,
(ii) - bei der Auslegung des Profils einer Lamelle der ersten Zone auf der stromabwärtigen Seite der ersten Scheibe, wenn das Laufrad in einer Richtung parallel zur Rotationsachse gesehen wird und sich im Uhrzeigersinn dreht (Fig. 4, Rot), der vordere Rand der Lamelle auf dem großen Durchmesser der Scheibe platziert wird, und der hintere Rand der Lamelle auf dem kleinen Durchmesser der Scheibe platziert wird und winkelmäßig nach hinten verschoben wird
- die Werte für den Winkelversatz zwischen dem vorderen und hinteren Rand des Blatts und dessen Wölbung Standardwerte sind, die zusammen mit den 5 Parametern bereitgestellt werden und auf Wunsch vom Entwickler des Laufrads korrigiert werden,
(iii) auf der zweiten Scheibe (Fig. 4, R2 A) die Unterseite (Fig. 4, R2 Int) und Oberseite (Fig. 4, R2 Ext) des Eingangs der Rotorblätter definiert werden, und das Profil einer Lamelle von der ersten Zone auf der zweiten Scheibe (Fig. 4, R2) sich mit derjenigen der Oberseite (Fig. 4, R2 Ext) des Eingangs eines Rotorblatts verbindet und vorzugsweise damit zusammenfällt, deren Oberseiten-Flächenprofil ebenfalls den 5 Parametern unterliegt, und die Rotorblätter an ihrem größten Durchmesserbeim Auftreffen auf der dritten Scheibe ihre Unter- und Oberseitenlamellen aufweisen, die sich mit dieser Scheibe verfestigen, indem sie sie durchqueren,
(iv) und dass, im Schnitt durch eine die Rotationsachse (Fig. 3) enthaltende Meridianebene gesehen, die mindestens eine kreisförmige Umfangskammer, in die innere Kanäle der Rotorblätter münden, durch einen Raum gebildet wird, der zwischen Kreisabschnitten (Fig. 3, C) enthalten ist, die vom Entwickler wie folgt definiert sind:
- Geradensegmente, die als Bezugspunkte als Trägerlänge für die 5 Parameter dienen, werden von Punkten ausgehend gezogen, die auf dem Rand des großen und des kleinen Durchmessers der dritten Scheibe (Fig. 6, L1, L2) platziert sind, und zum Mittelpunkt des Laufrads mit einem Winkelwert (Fig. 6, α) von 0 bis 90° gegenüber der Fläche der dritten Scheibe fortgesetzt werden, wobei die Winkelwerte standardmäßig wie die anderen Werte der 5 Parameter bereitgestellt werden, die auf Wunsch auch korrigiert werden können,
- in dem Mittelpunkt dieser Segmente sind Senkrechten (Fig. 6, P1, P2) platziert, auf denen der Entwickler die Mittelpunkte der Kreisabschnitte platziert, die die zwei Enden der Segmente verbinden.

2. Verfahren zur Auslegung, Konstruktion und Herstellung eines Turbo-Heliko-Reaktor (THR) Laufrads nach dem vorhergehenden Anspruch, **dadurch gekennzeichnet, dass**:
auf der stromabwärtigen Seite der zweiten Scheibe der Eingang der hohlen Rotorblätter positioniert ist, die die zweite Zone (2) des Laufrads bilden, die Lamellen der ersten Zone mit den Lamellen der Oberseite (Fig. 4, R2 Ext) der Blätter (Fig. 4, A) in Übereinstimmung gebracht werden, die ebenfalls an die 5 Parameter angepasst sind, sich am kleinen Durchmesser der Blätter der Fluideingang und am großen Durchmesser der Blätter der Fluidausgang befindet,
die Blätter aus 2 Lamellen bestehen, und an ihrem großen Durchmesser in eine hinten liegende kreisförmige Kammer münden, die die dritte Zone ist (Fig. 5, 3).
die Oberseiten-Lamelle (Fig. 4, R2 Ext), axial in einer orthoaxialen Schnittebene gesehen, am Eingang des Blatts und am Ausgang des Blatts konvex ist (Fig. 4, R3 A), und
die Unterseiten-Lamelle (Fig. 4, R2 Int), axial in einer orthoaxialen Schnittebene gesehen, am Eingang des Blatts konkav und am Ausgang des Blatts konvex ist (Fig. 4, R3 Int).

3. Verfahren zur Auslegung, Konstruktion und Herstellung eines Turbo-Heliko-Reaktor (THR) Laufrads nach einem der vorhergehenden Ansprüche, **dadurch gekennzeichnet, dass**:
die Rotorblätter auf die stromaufwärtige Seite der dritten Scheibe (Fig. 3, R3) münden, die sie durchqueren,
der rechte Rand des Blatts (Fig. 4, R3 A B C D), axial in einer orthoaxialen Schnittebene gesehen, auf dem großen Durchmesser der Scheibe platziert, und der linke Rand des Blatts (Fig. 4, R3 A C D) axial in einer orthoaxialen Schnittebene gesehen, auf dem kleinen Durchmesser der Scheibe platziert wird,
die Länge der Blätter durch den Winkelabschnitt der Scheiben gegeben wird, in den sie passen, dieser Abschnitt im Prinzip durch den Wert der 360° des Laufradumfangs geteilt durch die Anzahl der Blätter bestimmt wird, weil vorzugsweise die Blätter Rand an Rand angrenzen und sich an den Rändern nicht überlappen, dieser Wert jedoch vom Entwickler unter Kenntnis des Grundes geändert werden kann.

4. Verfahren zur Auslegung, Konstruktion und Herstellung eines Turbo-Heliko-Reaktor (THR) Laufrads, das Umgebungsfluide fördert, wobei das Laufrad ein Hybridlaufrad THRE ist, das zusätzlich ein sehr energetisches Fluid verwendet, nach einem der vorhergehenden Ansprüche, **dadurch gekennzeichnet, dass**:
das Hybridlaufrad THRE zusätzlich zum Turboreaktor des Laufrads, das mit dem Umgebungsfluid wirkt, ein sehr energiereiches Fluid verwendet, das von der hohlen Zentralwelle des Laufrads eingebracht wird,
dieses Fluid hinter dem Laufrad in die Hohlwelle eintritt und dann zum Eingang der hohlen Rotorblätter geleitet wird, die in zwei separate Teile (Fig. 3, Ps1, Ps2) mit einem radialen vertikalen Schott oder durch ein Kreisschott geteilt sind, die sich über die gesamte Länge im Inneren des Blatts fortsetzen,
sich in der zweiten Scheibe des Laufrads sein kleiner Durchmesser zum Mittelpunkt des Laufrads soweit verringert, dass sie sich mit der Außenseite des Hohlwellenrohrs verbindet, das an dieser Stelle durchtrennt wird und das Fluid mit hohem Energiepotenzial zuführt, eine Scheibe stromaufwärts des Laufrads, etwas stromaufwärts der zweiten Scheibe (Fig. 3, d), platziert ist, diese Scheibe von der Achse des Laufrads ausgeht und einen Raum zwischen ihnen schafft, der durch einen zylindrischen Ring (Fig. 3 b) geschlossen wird, der das Kreisschott fortsetzt oder die genannten radialen vertikalen Schotts abdeckt, die die hohlen Rotorblätter teilen,
radiale Abstandshalter im Zwischenbereich des genannten Raums platziert werden.

5. Verfahren zur Auslegung, Konstruktion und Herstellung eines Turbo-Heliko-Reaktor (THRE) Hybridlaufrads, das ein zusätzliches energetisches Fluid verwendet, das die hohlen Blätter durchquert, nach Anspruch 4, **dadurch gekennzeichnet, dass**:
ein erster großer Kreisabschnitt mit dem Bild der 5 Parameter konstruiert wird, dessen Ende der geraden Linie zu einem Mittelpunkt wird, der auf dem großen Durchmesser der dritten Scheibe positioniert wird (Fig. 3, C),
ein Winkel (α) mit einem gewählten Wert, der von 0 bis 90° reicht, zwischen der vorstehend genannten Bezugsgeraden und der Geraden der gegebenen Lamellenlänge mit allen Werten der 5 Parameter geschrieben wird, die standardmäßig bereitgestellt werden und vom Entwickler auf Wunsch korrigiert werden können.
ein zweiter Kreisabschnitt mit dem Bild der 5 Parameter auf gleiche Weise mit dem Ende der geraden Linie konstruiert wird, die zu einem Mittelpunkt wird, der auf dem kleinen Durchmesser der dritten Scheibe positioniert wird (Fig. 6, C),
ein Winkel (α) mit einem gewählten Wert, der von 0 bis 90° reicht, zwischen der vorstehend genannten Bezugsgeraden und der Geraden der gegebenen Lamellenlänge mit allen Werten der 5 Parameter geschrieben wird, die standardmäßig bereitgestellt werden und vom Entwickler auf Wunsch korrigiert werden können,
ein weiterer Kreisabschnitt mit dem Bild der 5 Parameter auf die gleiche Weise mit dem Ende der geraden Linie konstruiert wird, die zu einem Mittelpunkt wird, der bei Auftreffen des vorstehend erwähnten Schotts auf der dritten Scheibe positioniert wird (Fig. 7).
ein Winkel (α) mit einem gewählten Wert, der von 0 bis 90° reicht, zwischen der vorstehend genannten Bezugsgeraden und der Geraden der gegebenen Lamellenlänge mit allen Werten der 5 Parameter geschrieben wird, die standardmäßig bereitgestellt werden und vom Entwickler auf Wunsch korrigiert werden können,
zwischen den Kreisabschnitten Abstandshalter positioniert sind, die profiliert und so ausgerichtet sind, dass das Fluid in die gleiche Richtung fließt, in der das Laufrad sich drehen möchte (Fig. 8), und zwischen dem zweiten und dem dritten Kreisabschnitt radiale Abstandshalter positioniert sind.

6. Verfahren zur Auslegung, Konstruktion und Herstellung eines Turbo-Heliko-Reaktor (THRE) Hybridlaufrads, das zusätzlich ein energetisches Fluid verwendet, nach Anspruch 4 oder 5, **dadurch gekennzeichnet, dass**:
ausgehend von der hohlen Welle das Energiefluid in Rohre geleitet wird, die dem beschriebenen Weg folgen, die durch die hohlen Rotorblätter verlaufen und in den kreisförmigen Kammern zwischen dem zweiten und dem dritten Kreisabschnitt enden, die vom Entwickler zur Aufnahme der Fluide angepasst werden.

7. Verfahren zur Auslegung, Konstruktion und Herstellung eines Turbo-Heliko-Reaktor (THRE) Hybridlaufrads, das zusätzlich ein energetisches Fluid verwendet, nach einem der Ansprüche 4 bis 6, **dadurch gekennzeichnet, dass**:
durch die Kanäle, die normalerweise für das Fließen von Fluiden mit hohem Energiepotenzial reserviert sind, elektrische Leiter geführt werden, die an den peripheren Kammern enden und so positioniert sind, dass sie die Energie abgeben, die zum Zünden eines Lichtbogens und/oder zum Beleuchten einer Leuchtdiode notwendig ist.

8. Verfahren zur Auslegung, Konstruktion und Herstellung eines Turbo-Heliko-Reaktor (THR) Laufrads nach einem der vorhergehenden Ansprüche, **dadurch gekennzeichnet, dass**:
das gesamte Laufrad einschließlich der Scheiben (Fig. 4, R1 R2 R3) nach dem Prinzip der 5 Parameter konstruiert ist, und es ermöglicht, mithilfe von unendlich kleinen Kreiswerten scharfe Ränder zu erhalten, die für das Eindringen der Blätter und Lamellen in die Produkte notwendig sind, weshalb es unter Verwendung von Kreisen mit beliebigem Durchmesser (Fig. 1, 1, 2, 3) und Geraden (4, 5) möglich ist, den Lamellen und den Blättern beliebige Materialstärken zu geben, wobei die Wölbung auch umgekehrt werden kann und positiv oder negativ sein kann.

## Claims

1. A method for the design, construction and manufacture of a turbo-helico-reactor (THR) wheel for all fluids, wherein:
the skeleton of the wheel is constructed between three washers (Fig. 3, R1 - R2 - R3), the three washers (Fig. 3, R1 - R2 - R3) being concentric to the axis of rotation and axially spaced from one another in the general axial direction of the flow, the wheel comprising 3 areas, of which the upstream (Fig. 3, AV) of the wheel constitutes a first area (1) for the entry of fluid, of which the propeller (Fig. 5, 2) constitutes a second area (2), and of which a peripheral chamber (Fig. 5, 3) of the downstream side of the wheel constitutes a third area (3), which chamber acts, through peripheral circular slits, as a reactor,
the first area (1) extending axially from the first washer (R1) to the second washer (R2), the second area (2) extending axially from the second washer (R2) to the third washer (R3), and the third area (3) extending axially from the third washer (R3) in the downstream direction,
in the first area (1) blades extend axially between the first washer (R1) and the second washer (R2), in the second area (2) hollow vanes of the propeller extend axially between the second washer (R2) and the third washer (R3), the interior of each of these hollow vanes having an inlet located in the plane of the second washer (R2),
the hollow vanes of the propellers are adapted to distribute at least one fluid into at least one peripheral chamber into which lead the inner ducts of these vanes (Fig. 3), a certain geometry of the skeleton is defined using the "CARPYZ" principle, also called the five-parameter principle (Fig. 1), which allows creating vanes of any length and convex and
hollow curves by adjusting only five numerical values which are
-- a value for a geometric figure which has a centre at the left edge of the blade,
-- a value for a geometric figure which has a centre at the right edge of the blade,
-- a value for the diameter of a circle placed at the centre of the blade by its body,
-- a value for the camber determined by the relative position of the three aforementioned circles with respect to one another,
-- and a value for the length of the blade given between the 2 centres of the 2 edges, principle of which also allows combining curves together as desired by superimposing the centres with one another,
- the first area (Fig. 5, 1) favours the penetration of the fluid into the inlet of the hollow vanes of the propeller (Fig. 4, A R2),
- the profile of a blade of the first area (Fig. 5, 1) is designed on the downstream face of the first washer placed upstream of the wheel (Fig. 3, R1), the diameters of which are provided by default, positioned on the axis upstream of the wheel (Fig. 4, R1 and Fig. 2, R1),
- another blade profile similar to the previous one is projected with the five parameters (Fig. 4, R2) on the upstream face of the second washer (Fig. 4, R2 A),
- the blade is generated between the profiles of the two washers with the five parameters, values being provided for the distance that separates the two washers and for the angular offset between the two washers which makes it possible to twist the blades, positively or negatively, these values being provided by default and corrected by the designer, the blades then being said to be neutral, or moving downstream or being withdrawn,
- the wheel is rotated by a shaft secured to the centre downstream of the wheel in the chosen direction of rotation (Fig. 4, Rot), from where the upstream side of the wheel is constructed, which is inseparable from the downstream side of the wheel (Fig. 5, 1-2-3), **characterised in that**:
(i) - the skeleton of the wheel is constructed between the three washers (Fig. 3, R1 - R2 - R3) using a specific software package that provides a basic image (Fig. 5) where all the constituent elements of the wheel are cited with numerical and arithmetic values that are provided by default in a non-exhaustive manner, this image being created arbitrarily by the software package,
- with the image shown on the screen, intuitively determined values are provided, according to the wheels already produced but which can evolve infinitely according to the expected use of the designed wheel (for example: diameters, number of vanes, shape of the vanes, profile of the chambers, etc.), by continuously using the "CARPYZ" principle, known as the five-parameter principle (Fig. 1),
- this basic image shows the blades of the first area (Fig. 5, 1), and the geometry of the blade is generated by the computer between the profiles of the two washers with the five parameters,
(ii) - during the design of the profile of a blade of the first area on the downstream face of the first washer, if the wheel is viewed in a direction parallel to the axis of rotation and rotates clockwise (Fig. 4, Rot), the front edge of the blade is placed on the large diameter of the washer and the rear edge of the blade is placed on the small diameter of the washer and is angularly offset towards the back,
- the values of the angular offset between the front and rear edges of the blade and the camber thereof are values provided by default with the five parameters and are corrected on demand by the designer of the wheel,
(iii) on the second washer (Fig. 4, R2 A) are defined the positive side (Fig. 4, R2 Int) and the negative side (Fig. 4, R2 Ext) of the inlet of the propeller blades, and the profile of a blade of the first area on the second washer (Fig. 4, R2) is connected and is preferably coincident with that of the negative side (Fig. 4, R2 Ext) of the inlet of a propeller blade, negative side profile of which is also subjected to the five parameters, and at their largest diameter, the propeller blades arriving on the third washer have their positive and negative side blades which solidify with this washer when passing through it,
(iv) and **in that**, viewed in cross-section on a meridional plane containing the axis of rotation (Fig. 3), the at least one peripheral circular chamber into which lead the inner ducts of the propeller vanes is formed by a space contained between the portions of circles (Fig. 3, C) defined by the designer as follows:
- segments of straight lines which serve as references as the support length for the five parameters, are drawn starting from points placed on the edge of the large and small diameter of the third washer (Fig. 6, L1, L2), and are continued towards the centre of the wheel at an angular value (Fig. 6, α) from 0° to 90° with regard to the face of the third washer, the angular values of which are provided by default like the other values of the five parameters which can also be corrected on demand,
- at the centre of these line segments are placed perpendicular lines (Fig. 6, P1, P2) on which the designer places the centres of said portions of circles which join the two ends of the line segments.

2. Method for the design, construction and manufacture of a turbo-helico-reactor (THR) wheel according to the preceding claim, **characterised in that**:
on the downstream face of the second washer is positioned the inlet of the hollow vanes of the propeller which constitute the second area (2) of the wheel, the blades of the first area are brought into line with the blades of the negative side (Fig. 4, R2 Ext) of the vanes (Fig. 4, A) which are also adapted to the five parameters, the fluid inlet is at the small diameter of the vanes and the fluid outlet is at the large diameter of the vanes,
the vanes consist of two blades and open at their large diameter into a circular chamber located at the rear, which is the third area (Fig. 5, 3).
the negative side blade (Fig. 4, R2 Ext) of the vane, viewed axially on an orthoaxial section plane, is convex at the inlet of the vane and at the outlet of the vane (Fig. 4, R3 A), and
the positive side blade (Fig. 4, R2 Int) of the vane, viewed axially on an orthoaxial section plane, is concave at the inlet of the vane and convex at the outlet of the vane (Fig. 4, R3 Int).

3. Method for the design, construction and manufacture of a turbo-helico-reactor (THR) wheel according to one of the preceding claims, **characterised in that**:
the vanes of the propeller open onto the upstream face of the third washer (Fig. 3, R3) through which they pass,
the right edge of the vane (Fig. 4, R3 A B C D), viewed axially on an orthoaxial section plane, is placed on the large diameter of the washer and the left edge of the vane (Fig. 4, R3 A C D), viewed axially on an orthoaxial section plane, is placed on the small diameter of the washer,
the length of the vanes is given by the angular portion of the washers in which they fit, this portion is in principle determined by the value of the 360° of the circumference of the wheel, divided by the number of vanes, because preferably the vanes adjoin edge to edge and do not overlap one another at the edges; however, this value can be modified knowingly by the designer.

4. Method for the design, construction and manufacture of a turbo-helico-reactor (THR) wheel which conveys ambient fluids, the wheel being a THRE hybrid wheel, which uses an additional highly energising fluid, according to one of the preceding claims, **characterised in that**:
the THRE hybrid wheel uses, in addition to the turbo reactor of the wheel, which acts with the ambient fluid, a highly energising fluid that is injected via the central shaft of the wheel, which is hollow,
this fluid enters the hollow shaft downstream of the propeller and is then led to the inlet of the propeller vanes which are hollow and which are split into two separate parts (Fig. 3, Ps1, Ps2) with a radial vertical partition, or by a circular partition, which are continued along the entire length inside the vane,
the diameter of the second washer of the wheel decreases towards the centre of the wheel and goes so far as to become connected with the outside of the tube of the hollow shaft which is cut at this place and which provides the fluid with high energy potential,
a disc is placed towards the upstream side of the wheel, a little upstream of the second washer (Fig. 3, d), this disc starts from the axis of the wheel and creates therebetween a space which is closed by a cylindrical ring (Fig. 3, b) which continues the circular partition or caps said radial vertical partitions which share the hollow propeller vanes,
radial spacers are placed in the space therebetween.

5. Method for the design, construction and manufacture of a hybrid turbo-helico-reactor (THRE) wheel which uses an additional energising fluid that passes through the hollow vanes, according to claim 4, **characterised in that**:
a first large portion of circle is constructed with the image of the five parameters, the end of the straight line of which becomes a centre that is positioned on the large diameter of the third washer (Fig. 3, C),
an angle (α) of a chosen value, from 0° to 90°, is drawn between the aforementioned reference straight line and the straight line of the given blade length with all the values of the five parameters which are provided by default and which can be corrected on demand by the designer.
a second portion of circle is constructed with the image of the five parameters in the same way with the end of the straight line which becomes a centre that is positioned on the small diameter of the third washer (Fig. 6, C),
an angle (α) of a chosen value, from 0° to 90°, is drawn between the aforementioned reference straight line and the straight line of the given blade length with all the values of the five parameters which are provided by default and which can be corrected on demand by the designer,
another portion of circle is constructed with the image of the five parameters in the same way with the end of the straight line which becomes a centre that is positioned where the aforementioned partition reaches the third washer (Fig. 7).
an angle (α) of a chosen value, from 0° to 90°, is drawn between the aforementioned reference straight line and the straight line of the given blade length with all the values of the five parameters which are provided by default and which can be corrected on demand by the designer,
profiled and oriented spacers are positioned between the portions of circle in order to make the fluid flow in the same direction as required for the wheel to rotate (Fig. 8), and radial spacers are placed between the second and the third portion of circle.

6. Method for the design, construction and manufacture of a hybrid turbo-helico-reactor (THRE) wheel which uses an additional energising fluid, according to claim 4 or 5, **characterised in that**:
starting from the hollow of the shaft, the energising fluid is injected into tubes which follow the path described which pass through the hollow vanes of the propeller and end in the circular chambers located between the second and the third portion of circle adapted by the designer to receive the fluids.

7. Method for the design, construction and manufacture of a hybrid turbo-helico-reactor (THRE) wheel which uses an additional energising fluid, according to one of claims 4 to 6, **characterised in that**:
electrical conductors are passed through the ducts usually reserved for the flow of fluids with high energy potential, said conductors ending at the peripheral chambers and being positioned to deliver the energy necessary to initiate an electric arc and/or to illuminate a light-emitting diode.

8. Method for the design, construction and manufacture of a turbo-helico-reactor (THR) wheel according to one of the preceding claims, **characterised in that**:
the whole wheel including the washers (Fig. 4, R1 R2 R3) is constructed using the five-parameter principle in its entirety and makes it possible to obtain, by means of infinitely small circle values, the sharp edges required for the penetration of the vanes and blades into the products, so that by using circles of any diameter (Fig. 1, 1, 2, 3) and straight lines (4, 5) it is possible to give the vanes and blades the desired material thickness; the camber can also be reversed and can be positive or negative.
